# EUROPEAN PATENT APPLICATION

(11) **EP 2 615 516 A1**
(43) Date of publication of application: **17.07.2013**
(21) Application number: 12000149.0
(22) Date of filing: 12.01.2012
(51) Int. Cl.: G05D 23/13, F24D 19/10

(54) **Temperature control system and method for controlling a room temperature**

(71) Applicant: Danfoss A/S, 6430 Nordborg (DK)
(72) Inventor: Halkjaer, Brane Sig, 8732 Hovedgaard (DK); Gammeljord, Peter, 7100 Vejle (DK); Sörensen, Bent, 7190 Billund (DK)
(74) Representative: Knoblauch, Andreas

(57) **Abstract**

The invention relates to a temperature control system (1) comprising an inlet (2), a return (3), a controller (4), at least one temperature delivering circuit (5, 6, 7) connecting the inlet (2) and the return (3), a hot fluid supply (8) and a cold fluid supply (9) connected to the inlet (2) and at least one outlet (11) connected to the return (3).

For ensuring a correct and stable fluid temperature in the temperature control system (1), flow control valves (14, 15) are arranged in the hot fluid supply (8) and in the cold fluid supply (9) respectively, and a flow temperature sensor (19) is arranged at the inlet (2).

Further the invention relates to a method for using such a system.

## Description

The invention relates to a temperature control system, in particular to a room temperature control system, comprising:
- an inlet,
- a return,
- a controller,
- at least one temperature delivering circuit connecting the inlet and the return,
- a hot fluid supply and a cold fluid supply connected to the inlet and
- at least one outlet connected to the return.

Further the invention relates to a method for controlling a room temperature by such a system.

Room temperature control systems are used for the climatisation of buildings. A temperature delivering circuit can be installed in a floor or a wall or a ceiling for example. Such a solution provides a common temperature in the whole room. Often, water is used as a fluid in such systems. For each room of a building a separate temperature delivering circuit can be provided. In this case the inlet distributes the fluid to the temperature delivering circuits by means of an inlet manifold or the like.

The system is used for cooling or for heating purposes depending on the temperature of the fluid supplied to the inlet and distributed to the temperature delivering circuits. It is known to provide the inlet with two supplies, a cold fluid supply and a hot fluid supply. If cooling is demanded, the cold fluid is distributed by the inlet manifold to the temperature delivering circuits. If heating is necessary to obtain a set temperature, the hot fluid is distributed by the inlet manifold to the temperature delivering circuits.

Such systems will always have a dead band around the set temperature. For example, the dead band can be 2 or 4 degrees centigrade. If the room thermostat is, for example, set at 21 degrees, the limit values will be between 19 and 23 degrees. To avoid a permanent switching between cooling and heating, waiting for a predetermined time period between cooling and heating and vice versa can be useful.

It is an object of the invention to ensure a correct and stable fluid temperature in the temperature control system.

This object is achieved by a temperature control system as mentioned above therein, that flow control valves, controllable by the controller, are arranged in the hot fluid supply and in the cold fluid supply respectively and a flow temperature sensor is arranged at the inlet.

In this case it is possible to measure the flow temperature at the inlet. By measuring this temperature and controlling the valves in the cold and hot supplies, a desired temperature of the fluid distributed to the temperature delivering circuits can be obtained by mixing the warm and cold fluid accordingly. The term "mixing" means in general combining volumes of different temperatured fluids irrespective how large the volumes are. This enables a constant fluid temperature and a reduction of the dead band. For example, a preferred inlet temperature of the fluid can be determined in respect to a length of the temperature delivering circuits and a dimensioning of the rooms. The deviation between the set temperature and the actual temperature is achieved by feedback from the temperature sensor mounted at the inlet and used for controlling the valves. Therefore a stable temperature is ensured.

Preferably the valves are on/off valves controlled via pulse width modulation. Pulse width modulation regulates like on/off control but in sequences or cycles which are run through constantly with a fixed time interval. The deviation between the actual temperature and the set temperature defines, how long the control valve should remain open in percentage of each sequence or cycle. The pulse width modulation allows a mixing of the hot and cold fluid, so that a stable temperature in the temperature delivering circuits is ensured.

Preferably the flow temperature at the inlet is set to a predefined temperature depending on an operation mode of the system. The system normally comprises two operation modes, the heating mode and the cooling mode. Two predefined temperatures can be saved in the system, one for the heating mode and one for the cooling mode. The temperature for the cooling mode should be less than the temperature for the heating mode. Then it is possible to achieve the desired temperature in the rooms in a short time.

Preferably a dew point sensor is arranged at an inlet of an inlet manifold. By means of a dew point sensor a risk of condensation can be eliminated. This makes it simple to use the lowest possible inlet temperature in the heating mode and thereby to save energy.

In a preferred embodiment a mixing pump is arranged between the inlet and the return. Using this pump an additional mixing loop can be provided.

Preferably the system comprises more than one temperature delivering circuit, for example one temperature delivering circuit for each room in a house. The return should comprise a valve for each circuit for controlling the flow through each circuit individually. The valves can be controllable by the controller. Then it is possible to control the temperature in each room.

In particular, each temperature delivering circuit is provided with at least one room thermostat. Then an individual temperature control of each circuit is possible. The room thermostats should be able to communicate with the controller, for example by Bluetooth or WLAN or any other wireless communication.

Advantageously one of the thermostats is selected as master thermostat, which determines the operating mode of the system. This thermostat determines, whether the system is used in the heating or in the cooling mode and defines the temperature of the fluid which should be obtained at the inlet.

Preferably at least one flow control valve, in particular an on/off valve, controllable by the controller, is arranged in the outlet. This valve increases a safety of the system and enables the use of a return without additional valves. Further, the maximum flow of fluid can be set with a valve in the outlet.

Preferentially the outlet comprises a hot fluid return and a cold fluid return and a valve is arranged in the hot fluid return and the cold fluid return, respectively. Then it is possible to use a cold fluid return in the heating mode and a hot fluid return in the cooling mode. By means of the valves in each of the returns, it is possible to define different maximum flows for the heating mode and the cooling mode.

The above mentioned object is achieved by a method for controlling a room temperature comprising the features of claim 10.

By measuring and controlling the temperature of the fluid in the inlet it is possible to ensure a correct and stable fluid temperature in the system. A set temperature can be determined in respect to a length of the temperature delivering circuits and the dimensioning of the rooms. A temperature in the room can be controlled more accurately.

Preferably a heating mode or a cooling mode is selected depending on a difference between a measured room temperature and a desired room temperature. Then an automatically switching between the heating mode and the cooling mode is possible. The room temperature can be measured by means of thermostats, for example. The difference between the measured temperature and the desired temperature can then be calculated in the controller, which chooses the operating mode accordingly.

Preferentially the controller controls the valve in the hot fluid supply and the valve in the outlet in the heating mode and controls the valve in the cold fluid supply and the valve in the outlet in the cooling mode. So depending on the selected operating modes, different valves are controlled. This ensures short reaction times of the system.

The invention is described with reference to the drawings in respect to a preferred embodiment.

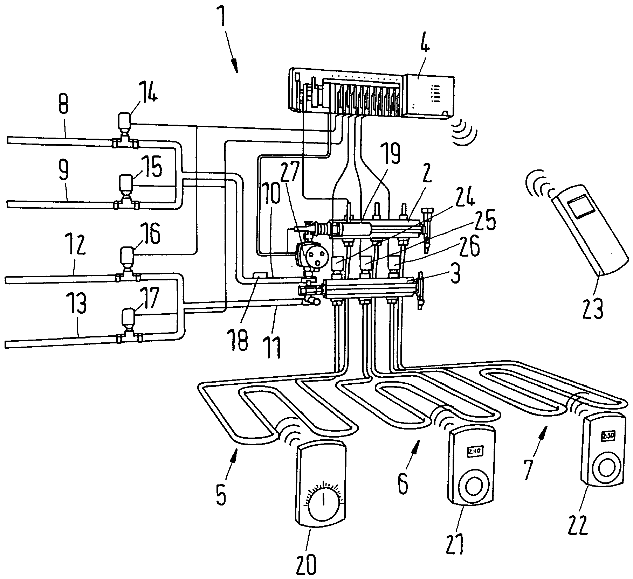

The only figure shows a room temperature control system.

The only figure shows a room temperature control system 1 comprising an inlet shown as inlet manifold 2 and a return shown as return manifold 3. For controlling the room temperature a controller 4 is provided. The inlet manifold 2 and the return manifold 3 are connected by three temperature delivering circuits 5, 6, 7. A fluid coming from a hot fluid supply 8 or a cold fluid supply 9 to an inlet 10 of the inlet manifold 2 is distributed by the inlet manifold 2 to the temperature delivering circuits 5, 6, 7. The fluid is then collected in the return manifold 3 and let out through an outlet 11.

The outlet 11 comprises a hot fluid return 12 and a cold fluid return 13.

In each of the supplies 8, 9 and returns 12, 13 one valve 14, 15, 16, 17 is arranged, which is controllable by the controller 4. When valve 14 is actuated, valve 16 is actuated as well. The same is true for valves 15, 17.

At the inlet 10 a dew point sensor 18 is arranged. A flow temperature sensor 19 is arranged on the inlet manifold 2. The signals of this sensors 18, 19 are collected and analysed in the controller 4.

Each temperature delivering circuit 5, 6, 7 is provided with one thermostat 20, 21, 22, which measures the room temperature and communicates with the controller 4. Therefore a wireless communication is provided. For controlling the controller 4 an additional remote control 23 can be provided, which communicates wireless with the controller 4. This additional remote control 23 can be used to define which of the thermostats 20, 21, 22 is the master thermostat.

The return manifold 3 comprises flow control valves 24, 25, 26, one for each temperature delivering circuit, to control the flow in each temperature delivering circuit 5, 6, 7 individually.

By means of the temperature sensor 19 located on the inlet manifold 2 and some software in the controller 4, it is possible to mix the cold fluid supplied in the cold supply 9 with the hot fluid supplied in the hot supply 8, so that a fluid with a preferred inlet temperature can be distributed by the inlet manifold 2 to the temperature delivering circuits 5, 6, 7. In most cases a small amount of hot water is added to a large amount of cold water or vice versa. The right mixing temperature can be determined by the controller by using the measured room temperatures of the thermostat 20, 21, 22, which is selected as a master thermostat. The control via pulse width modulation ensures correct and stable water temperature in the flow heating system. Thereby, a temperature deviation between the set temperature and the actual temperature at the inlet manifold 2 defines, how long the respective valve 14, 15 should remain open. By mixing hot and cold fluid a stable temperature is ensured. This simplifies the control of the room temperatures.

To achieve short response times of the system, an additional mixing pump 27 can be provided between the inlet manifold 2 and the return manifold 3.

## Claims

1. Temperature control system (1) comprising
- an inlet (2),
- a return (3),
- a controller (4),
- at least one temperature delivering circuit (5, 6, 7) connecting the inlet (2) and the return (3),
- a hot fluid supply (8) and a cold fluid supply (9) connected to the inlet (2),
- at least one outlet (11) connected to the return (3),
**characterised in that** flow control valves (14, 15), controllable by the controller (4), are arranged in the hot fluid supply (8) and in the cold fluid supply (9) respectively, and a flow temperature sensor (19) is arranged at the inlet (2).

2. Temperature control system according to claim 1, **characterised in that** the valves (14, 15) are on/off valves controlled via pulse width modulation.

3. Temperature control system according to claim 1 or 2, **characterised in that** the flow temperature at the inlet (2) is set to a predefined temperature depending on an operation mode of the system (1).

4. Temperature control system according to at least one of the claims 1-3, **characterised in that** a dew point sensor (18) is arranged at an inlet (10) of an inlet manifold (2).

5. Temperature control system according to at least one of the claims 1-4, **characterised in that** a mixing pump (27) is arranged between the inlet (2) and the return (3).

6. Temperature control system according to at least one of the claims 1-5, **characterised in that** each temperature delivering circuit (5, 6, 7) is provided with at least one room thermostat (20, 21, 22).

7. Temperature control system according to claim 6, **characterised in that** one of the thermostats (20, 21, 22) is selected as master thermostat, which determines the operating mode of the system (1).

8. Temperature control system according to at least one of the claims 1-7, **characterised in that** at least one flow control valve (16, 17), in particular an on/off valve, controllable by the controller (4), is arranged in the outlet (11).

9. Temperature control system according to at least one of the claims 1-8, **characterised in that** the outlet (11) comprises a hot fluid return (12) and a cold fluid return (13) and a valve (16, 17) is arranged in the hot fluid return (12) and the cold fluid return (13) respectively.

10. Method for controlling a room temperature by the system according to at least one of the preceding claims, **characterised in that** the temperature of the fluid in the inlet is measured and controlled by mixing hot and cold fluid.

11. Method according to claim 10, **characterised in that** a heating mode or a cooling mode is selected depending on a difference between a measured room temperature and a desired room temperature.

12. Method according to claim 10 or claim 11, **characterised in that** in the heating mode the controller controls the valve in the hot fluid supply and the valve in the outlet and that in the cooling mode the controller controls the valve in the cold fluid supply and the valve in the outlet.
